(19) Europäisches Patentamt
European Patent Office
Office européen des brevets

(11) **EP 1 177 235 B1**

(12) **EUROPEAN PATENT SPECIFICATION**

(45) Date of publication and mention
of the grant of the patent:
**23.02.2005 Bulletin 2005/08**

(51) Int Cl.[7]: **C08G 63/88**, B01D 9/00

(86) International application number:
**PCT/EP2000/004399**

(21) Application number: **00931229.9**

(22) Date of filing: **09.05.2000**

(87) International publication number:
**WO 2000/068294 (16.11.2000 Gazette 2000/46)**

(54) **PROCESS AND APPARATUS FOR THE CRYSTALLISATION OF POLYTRIMETHYLENE TEREPHTHALATE**

VERFAHREN UND VORRICHTUNG ZUR KRISTALLISATION VON POLYTRIMETHYLENTEREPHTHALAT

CRISTALLISATION DE POLYTRIMETHYLENE TEREPHTALATE ET DISPOSITIF A CET EFFET

(84) Designated Contracting States:
**AT BE CH CY DE DK ES FI FR GB GR IE IT LI LU MC NL PT SE**

(30) Priority: **11.05.1999 US 309923**
**11.05.1999 US 309921**

(43) Date of publication of application:
**06.02.2002 Bulletin 2002/06**

(73) Proprietor: **SHELL INTERNATIONALE RESEARCH MAATSCHAPPIJ B.V.**
**2596 HR Den Haag (NL)**

(72) Inventors:
• **CHEN, Ye-Mon**
**Sugar Land, TX 77479 (US)**
• **COREY, Ann, Marie**
**Akron, OH 44303 (US)**
• **DUH, Ben**
**Tallmadge, OH 44278 (US)**

(56) References cited:
**WO-A-97/23543          DE-B- 1 294 019**
**US-A- 2 829 771          US-A- 5 532 335**

**Description**

The present invention relates to a process and apparatus for the crystallisation of polytrimethylene terephthalate.

Polytrimethylene terephthalate is a polyester useful in fibre applications in the carpet and textile industries. The manufacture of polytrimethylene terephthalate involves the condensation polymerisation of 1,3-propanediol and terephthalic acid to a polymer having an intrinsic viscosity (IV) of about 0.4 to 1.0 dl/g. The polymer melt is discharged from the bottom of the melt reactor and extruded through an extrusion die into strands. The strands are quenched in cold water and cut into pellets for storage or transportation.

It has been found that polytrimethylene terephthalate pellets tend to stick together, or "block," during storage or shipping at temperatures above the polymer Tg (about 45°C), which can be reached during the summer in a silo or rail car. Agglomeration of the pellets can also occur during drying using a hopper-type dryer. Agglomeration of the pellets complicates and increases the costs of handling the pellets.

It is therefore an object of the present invention to produce polytrimethylene terephthalate pellets which are resistant to blocking during storage or shipping. It is a further object to produce polytrimethylene terephthalate pellets which can be dried in a hopper without agglomeration. It is a still further object of one aspect of the invention to reduce fines production in the manufacture of polytrimethylene terephthalate.

WO-A-97/23543 describes a process for crystallising polytrimethylene terephthalate by cooling a molten form thereof or by heating a glassy form thereof.

It has now been found that partially crystallised polytrimethylene terephthalate pellets are less susceptible to blocking, and a process has been developed for partial crystallisation of polytrimethylene terephthalate pellets. It would be desirable to practise such a process in the continuous polymerisation of polytrimethylene terephthalate.

It is therefore an object of the invention to provide apparatus for crystallising polytrimethylene terephthalate pellets in a continuous polymerisation process.

According to the present invention, there is provided a process for reducing the self-adhesiveness of polytrimethylene terephthalate pellets comprising the steps of:

contacting melt-phase-polymerised poly trimethylene terephthalate pellets having an intrinsic viscosity of at least 0.4 dl/g with an aqueous liquid at a temperature within the range of 60 to 100°C for a time sufficient to induce a degree of crystallinity of 35% to 45% in the polytrimethylene terephthalate pellets, wherein the process is carried out in an apparatus for increasing the crystallinity of polytrimethylene terephthalate pellets comprising:

a vertically-elongated vessel having

(a) at its upper end, a lateral inlet for controlled introduction of polytrimethylene terephthalate pellets in transport water in vortex flow through the upper portion thereof;
(b) means in the upper interior portion of the vessel for separating the polytrimethylene terephthalate pellets from the transport water and for removing the transport water from the vessel;
(c) sides which extend vertically from the top of the vessel and, in the lower portion thereof, taper inward to form a funnel which terminates in an exit for polytrimethylene terephthalate pellets from the bottom of the vessel;
(d) an inlet for controlled introduction of a heated aqueous liquid into the funnel end of the vessel; and
(e) means for opening and closing said exit to provide controlled flow of partially-crystallised pellets therefrom.

The present invention further provides an apparatus for increasing the crystallinity of poly trimethylene terephthalate pellets comprising:

a vertically-elongated vessel having

(a) at its upper end, a lateral inlet for controlled introduction of polytrimethylene terephthalate pellets in transport water in vortex flow through the upper portion thereof;
(b) means in the upper interior portion of the vessel for separating the polytrimethylene terephthalate pellets from the transport water and for removing the transport water from the vessel;
(c) sides which extend vertically from the top of the vessel and, in the lower portion thereof, taper inward to form a funnel which terminates in an exit for polytrimethylene terephthalate pellets from the bottom of the vessel;
(d) an inlet for controlled introduction of a heated aqueous liquid into the funnel end of the vessel; and

(e) means for opening and closing said exit to provide controlled flow of partially-crystallised pellets therefrom.

The present invention will now be described by way of example with reference to the accompanying drawings, in which:-

FIGURE 1 is a process flow diagram of one embodiment of the polytrimethylene terephthalate preparation process of the present invention.

FIGURE 2 is a schematic flow diagram of a continuous polytrimethylene terephthalate preparation process employing the apparatus of the present invention.

FIGURE 3 is a schematic cross-sectional diagram of one embodiment of the crystallisation apparatus of the present invention.

FIGURE 4 is a differential scanning calorimetric (DSC) thermogram of a clear, as-pelletised polytrimethylene terephthalate sample, with no additional crystallisation.

FIGURE 5 is a DSC thermogram of a partially-crystallised polytrimethylene terephthalate sample which has been immersed in 80°C water for 5 seconds.

FIGURE 6 is a DSC thermogram of a well-crystallised polytrimethylene terephthalate sample which had been immersed in 80°C water for 10 seconds.

FIGURE 7 shows the effects of hot-water immersion time and temperature on the density of polytrimethylene terephthalate.

FIGURE 8 shows the effects of hot-water immersion time and temperature on the degree of crystallinity of polytrimethylene terephthalate.

The present invention involves the preparation of polytrimethylene terephthalate pellets which have improved stability against blocking at elevated temperatures.

In general, polytrimethylene terephthalate is prepared by reacting, at elevated temperature, a molar excess of 1,3-propanediol with terephthalic acid in a two-stage (esterification/polycondensation) process, with removal of byproduct water, for a time effective to produce a polytrimethylene terephthalate having an intrinsic viscosity (measured in 60:40 phenol:tetrachloroethane at 30°C) of at least 0.4 dl/g.

The esterification step is carried out at a temperature within the range of 230 to 300°C, preferably 240 to 270°C, under elevated pressure, preferably under nitrogen gas, within the range of 137.8 to 1378 kPa (20 to 200 psi), preferably about 344.5 kPa (about 50 psi). Excess 1,3-propanediol and byproduct water are removed by suitable means such as overhead distillation as the esterification proceeds.

The esterification product, a low IV prepolymer, is then polycondensed under vacuum in the presence of a catalyst while byproduct water is removed. Suitable polycondensation catalysts include compounds of titanium or tin, such as titanium butoxide, present in an amount within the range of 10 to 400 ppm titanium or tin, based on the weight of the polymer. The polymerisation conditions are selected so as to produce a molten polyester having a target intrinsic viscosity of at least 0.4 dl/g, preferably within the range of 0.5 to 1.0 dl/g.

The polytrimethylene terephthalate is discharged from the melt reactor and passed through an extrusion die to form polymer melt strands which are cooled and partially solidified by contact with cold water on a strand guide. The sequence of pelletisation/crystallisation is not critical. Pre-pelletising crystallisation involves immersion of polymer melt strands in hot water prior to cutting of the strands, preferably en route from the extruder to the pelletiser. The preferred method, however, for process efficiency and pellet quality, is to conduct crystallisation downstream of pelletisation.

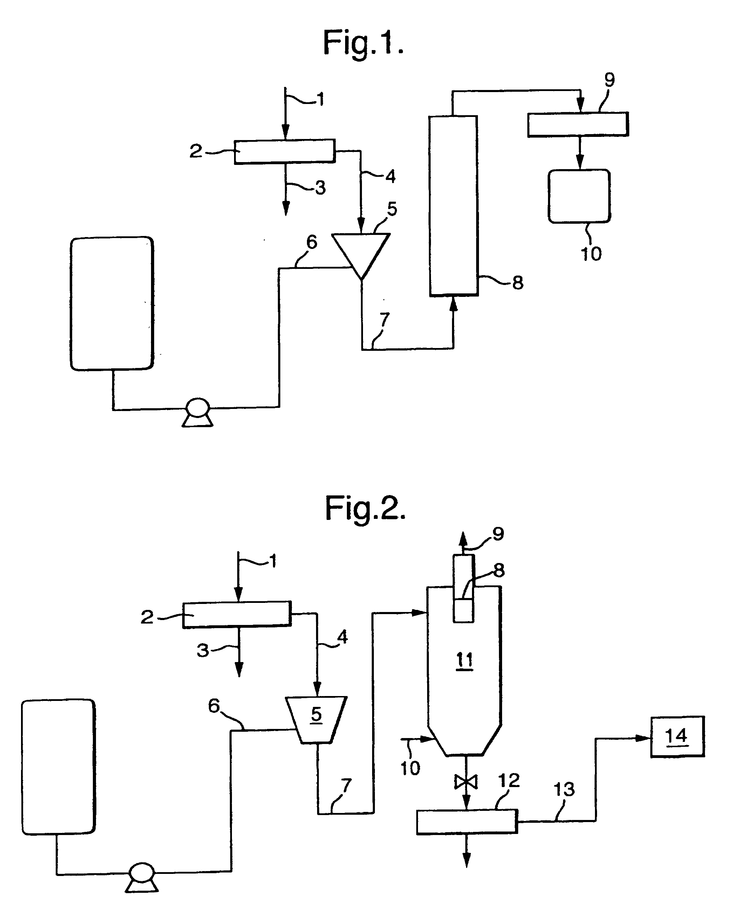

Immediately after pelletisation, the surfaces of the pellets are solid while the cores are still partially molten. To prevent the pellets from sticking together, the pellets are flushed with additional cooling water, which completely solidifies the pellets. In the embodiment as shown in Figure 1, the pellets are transported in a water slurry 1 to a dewatering screen 2 to remove most of the water 3. The pellets 4 at this stage are clear and have a low degree of crystallinity. The pellets 4 are then collected in hopper 5, combined with an aqueous liquid 6, preferably water, which can be preheated, and conveyed as a slurry 7 to the bottom of the hot water crystallisation apparatus 8, which can be any vessel that provides agitation, the desired fluid temperature and appropriate residence time. In its simplest form, crystallisation can be carried out in an elongated conduit between the pelletiser and the pellet dryer, such as, for example, a 4-6" diameter pipe through which a hot water slurry of pellets is passed at a rate which results in the desired hot water contact time. The slurry is passed from the crystallisation apparatus through screen 9 for water removal, and the pellets are transported to dryer 10.

Crystallisation of the pellets can be carried out in a batch or continuous process. For batch processes, crystallisation can be carried out in any suitable holding vessel that provides hot water agitation for adequate heat transfer and temperature control. The process is preferably carried out continuously for an efficient commercial process. Integration of crystallisation into a continuous polymerisation process requires coordination with upstream and downstream processing and careful control of pellet residence time in the crystalliser for uniform crystallisation of the pellets. For process economics, it is preferred that crystallisation be carried out on the pelletisation line, maximizing the use of residual pellet heat and eliminating the need for an additional pellet dryer.

In either batch or continuous crystallisation, the polytrimethylene terephthalate pellets will be immersed in hot aqueous liquid at temperatures within the range of 60 to 100°C, preferably 65 to 85°C, for a time sufficient to achieve the desired crystallinity. Said aqueous liquid is preferably water.

According to a preferred process, polytrimethylene terephthalate pellets exiting the pelletiser are washed with transport water onto a screen through which most of the water is drained. The pellets are then conveyed mechanically to a hot water crystallisation apparatus, which can be, for example, a vertical or horizontal liquid agitated vessel, a liquid fluidized bed, a hydraulic transfer system using hot water as the transfer medium, or a liquid moving bed providing the desired fluid temperature and residence time. A liquid moving bed is preferred because it provides uniform residence time and uniform heating of the pellets, resulting in uniform pellet crystallinity and opacity.

In a preferred process, as shown in Figure 2, the pellets are transported in a water slurry 1 to a dewatering screen 2 to remove most of the water 3. The pellets at this stage are clear and have a low degree of crystallinity. The pellets 4 are then collected in hopper 5, combined with water 6, which can be preheated, and conveyed as a slurry 7 to the top of crystallisation apparatus 11. Transport water is separated from the pellets through screen 8 and passed from the crystallisation apparatus via 9. The pellets travel in plug flow through the middle portion of the vessel and into a fluidized bed of hot water introduced via 10 into the cone-shaped bottom portion of the crystallisation apparatus. Movement of the pellets in the crystallisation apparatus is controlled so as to provide the contact time required to impart polymer crystallinity of at least 35%. The slurry is passed from the crystallisation apparatus through screen 12 for water removal, and the pellets are transported via 13 to dryer 14.

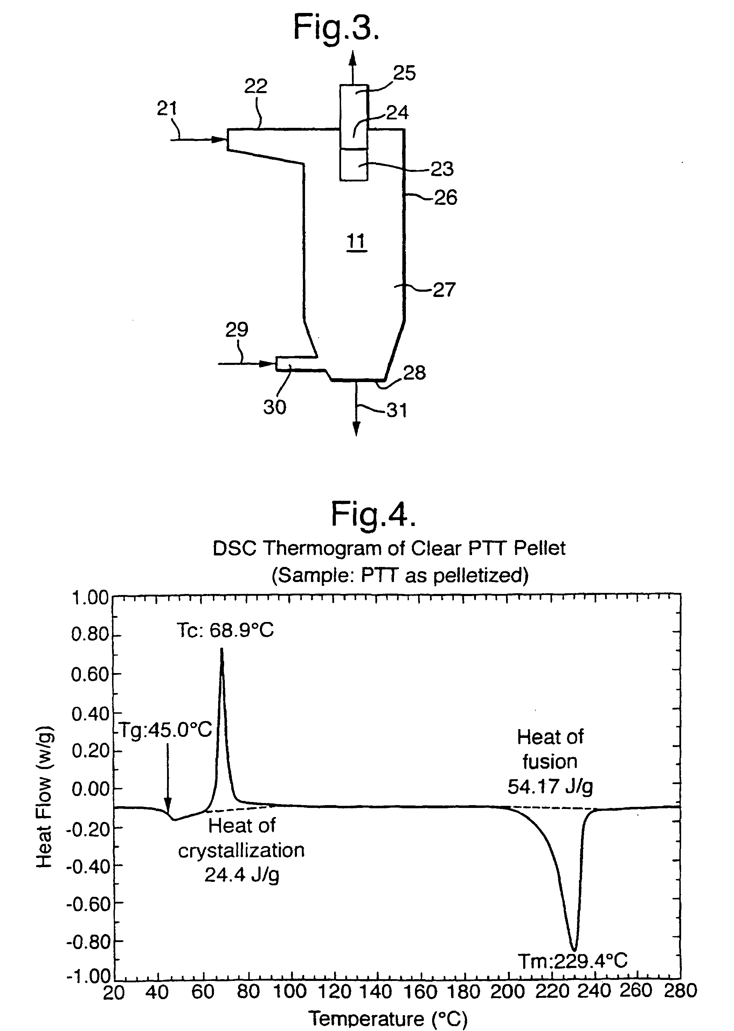

One embodiment of a preferred crystallisation apparatus, which is designed for continuous crystallisation of polytrimethylene terephthalate pellets in a liquid moving bed, is shown in FIGURE 3.

A slurry 21 of polytrimethylene terephthalate pellets transported from the pelletiser in hot water is introduced tangentially for vortex flow into the upper portion of vertically-elongated crystallisation apparatus 11 via horizontally-oriented entry conduit 22. Tangential introduction of the pellet slurry permits centrifugal separation of the pellets from the water within the interior upper portion of the apparatus. In the embodiment shown, the water passes through screen 23, into centre tube 24, and out of the tube via exit conduit 25, while the pellets rotate in a descending route along cylindrical crystallisation apparatus wall 26. The interior of the crystallisation apparatus can be fitted with baffles if desired. The descending pellets form a slow-moving bed in plug flow as they approach the middle portion 27 of the crystallisation apparatus. For optimum flow of crystallised pellets from the crystallisation apparatus, it has been found to be advantageous to have local fluidization near the bottom of the vessel, in the cone portion. This can be achieved with a total water flow rate such that the liquid velocity within the bottom cone region is well above the minimum fluidization velocity while the liquid velocity within the upper cyclindrical region of the vessel is below the minimum fluidization velocity. The speed of downward movement of the pellet bed is dependent on the speed of pellet discharge at the lower end 28 of the vessel and the flow of incoming hot water stream 29 from a water surge vessel (not shown) into the crystallisation apparatus via hot water inlet 30. The incoming water temperature will be within the range of 60 to 100°C, preferably 65 to 85°C. As the flow of the descending pellets slows, the concentration of pellets in the lower portion of the vessel increases. Because of the low effective pellet weight (pellet weight less liquid buoyancy), the lubricating action of the water, the fast crystallisation of polytrimethylene terephthalate and the low crystallisation temperatures required, no agglomeration of pellets will occur in the crystallisation apparatus so long as continuous movement of the pellets is maintained in the liquid in the lower portion of the vessel. The crystallised pellets exit the bottom of the cone and are passed via 31 to drying and further processing.

The crystallisation apparatus will typically have an operating pressure of 0 to 34.5 kPa (0 to 5 psig). The size of the apparatus will depend upon the operating variables and overall plant capacity. A typical hot water crystallisation apparatus in a commercial plant would be in the general range of 1.82 to 3.04 m (6 to 10 feet) in length, with the cone portion being 0.45 to 0.61 m (1.5 to 2 feet) of that total length. The pellet residence time will typically range from 30 seconds to 5 minutes.

The flow of the pellets through the crystallisation apparatus will thus approximately define three regions. In the upper half of the apparatus the concentration of pellets will be relatively dilute, with pellet concentration increasing below this level to form a moving bed of pellets in plug flow downward through the lower portion of the vessel at a volume concentration of approximately 50 to 70 percent. In the lower portion of the cone near the vessel exit, the entering hot water, introduced at a velocity to keep the pellets suspended, forms a fluidized bed of relatively dilute pellet volume concentration of approximately 40%. This local fluidization in the conical area is desirable to facilitate continuous discharge of the crystallised pellets from the vessel. This can be achieved by use of a total water flow rate such that the liquid velocity within the bottom cone region is well above the minimum fluidization velocity, while the liquid velocity within the intermediate region of the vessel is below the minimum fluidization velocity.

To ensure that the pellets are sufficiently crystallised to prevent blocking, it is desirable to crystallise the pellets to the extent that the product has a DSC thermogram characterised by the absence of a cold crystallisation peak (see Figs. 4 - 6). The imparted degree of crystallisation is related to the starting polymer density and IV, the temperature of the aqueous liquid and the length of time the polymer is immersed in the aqueous liquid. Said aqueous liquid is preferably water. The following chart provides general guidance on immersion times required to achieve at least 35% crystallinity (for non-delustered polytrimethylene terephthalate) over the temperature range of 60 to 100°C.

| Water Temperature (°C) | Crystallisation Time |
|---|---|
| 60 | 20 minutes |
| 65 | 3 minutes |
| 70 | 30 seconds |
| 80 | 10 seconds |
| 90 | 5 seconds |
| 100 | 3 seconds |

For commercial operation, the desirability of faster crystallisation must be balanced against the cost of maintaining higher water temperatures. The upper temperature is also limited by the tendency of polytrimethylene terephthalate to undergo hydrolytic degradation (detected as a decrease in intrinsic viscosity) at temperatures above about 100°C. For process efficiency and economics, the preferred water temperature is within the range of 65 to 85°C and the polymer is immersed for no longer than 3 minutes, preferably for a time within the range of 3 seconds to 3 minutes, with delustered polymer generally requiring longer immersion than non-delustered polymer.

After the selected residence time in the crystallisation apparatus, the pellet/water slurry is discharged into a pellet dryer. The pellets are cooled to a temperature below 60°C, either by cold water quench en route to the dryer or, if the dryer environment is sufficiently cool, in the dryer itself.

Polytrimethylene terephthalate pellets treated by the process and/or the crystallisation apparatus of the present invention will preferably have an opaque appearance and typically exhibit the following physical properties:

density of at least 1.33 g/cm$^3$;
crystallinity of at least 35%;
Tg of at least 60°C;
apparent crystallite size of at least 10 nm,

preferably in the range of 10 to 13 nm.

As used herein, "crystallinity" indicates the degree of crystallisation and refers to an increase in the crystalline fraction and a decrease in the amorphous fraction of the polymer. In general, a crystallinity of at least 35%, preferably within the range of 36 to 45%, measured as described below, is desired. The calculation of crystallinity herein is based on the relationship of volume fractional crystallinity ($X_c$) of a sample to the density ($D_s$) of the sample:

$$X_c = (D_s - D_a) / (D_c - D_a)$$

where $D_a$ is the density of amorphous polytrimethylene terephthalate (= 1.295 -g/cm$^3$) and $D_c$ is the density of polytrimethylene terephthalate crystal (= 1.387 g/cm$^3$) . The weight fractional crystallinity, $S_w$, equals $(D_c/D_s) X_c$. Crystallinity can also be estimated from a DSC thermogram, but it has been found that the described density method provides more consistent results, and this method has therefore been chosen for calculation of fractional crystallinity herein.

The process and apparatus of the present invention each overcome the problem of polytrimethylene terephthalate pellets adhering together during hot-weather storage or transportation, and enables drying of the pellets in a hopper-type dryer prior to melt processing or solid-state polymerisation. The process and apparatus of the present invention also assist in reducing fines which can be generated in the manufacture and processing of polytrimethylene terephthalate. The apparatus employs a liquid moving bed for uniform residence time and uniform heating of the pellets, resulting in uniform pellet crystallinity and opacity.

The resulting partially-crystallised polytrimethylene terephthalate pellets can be spun into fibres or made into film or engineering thermoplastics.

Example 1

Hot-Water Crystallisation of Amorphous Polytrimethylene Terephthalate.

Clear pellets of polytrimethylene terephthalate (total weight 5g) having an IV of 0.904 dl/g, a degree of polymerisation (DP) of about 102, and a weight per pellet of about 0.02g were placed in a wire mesh basket. The basket was placed in a 4L beaker filled with water heated to a constant temperature (as indicated in Table 1) between 50 and 100°C for a time ranging from 3 seconds to 30 minutes. The water was vigorously stirred over the time of immersion. The basket was removed from the hot water and immediately immersed in iced water to stop crystallisation. After drying in the room environment, each sample was tested as described below and the appearance of each sample was noted. Test results are shown in Table 1. Selected samples were also measured by wide angle x-ray diffraction (WAXD) to determine apparent crystallite size (ACS).

The IV of each treated sample was determined in 60:40 phenol: tetrachloroethane solvent at 30°C. A drop in IV indicates hydrolytic degradation during crystallisation in hot water. As can be seen in Table 1, significant IV drops occurred only under the more severe crystallisation conditions (e.g., 10 minutes or longer in 90°C water and 5 minutes or longer in 100°C water).

Each sample was scanned on a differential scanning calorimeter (DSC) at a rate of 10°C per minute. Useful DSC data included Tg, heat of fusion and heat of crystallisation. From the difference between the heat of fusion and the heat of crystallisation on the thermogram, the fractional crystallinity by weight, $S_w$, of the sample was calculated using 146 J/g for the heat of fusion for crystalline polytrimethylene terephthalate. Figures 4, 5 and 6 are DSC thermograms for 3 samples having different degrees of crystallisation.

Figure 4 shows a DSC thermogram for a clear, as-pelletised polytrimethylene terephthalate sample. It shows a Tg inflection at 45°C, a cold crystallisation peak with a peak temperature (Tm) at 68.9°C, and a fusion peak with a peak temperature (Tc) at 229.4°C. From the heat of fusion and heat of crystallisation, the crystallinity of the sample was calculated to be 20.4% based on DSC.

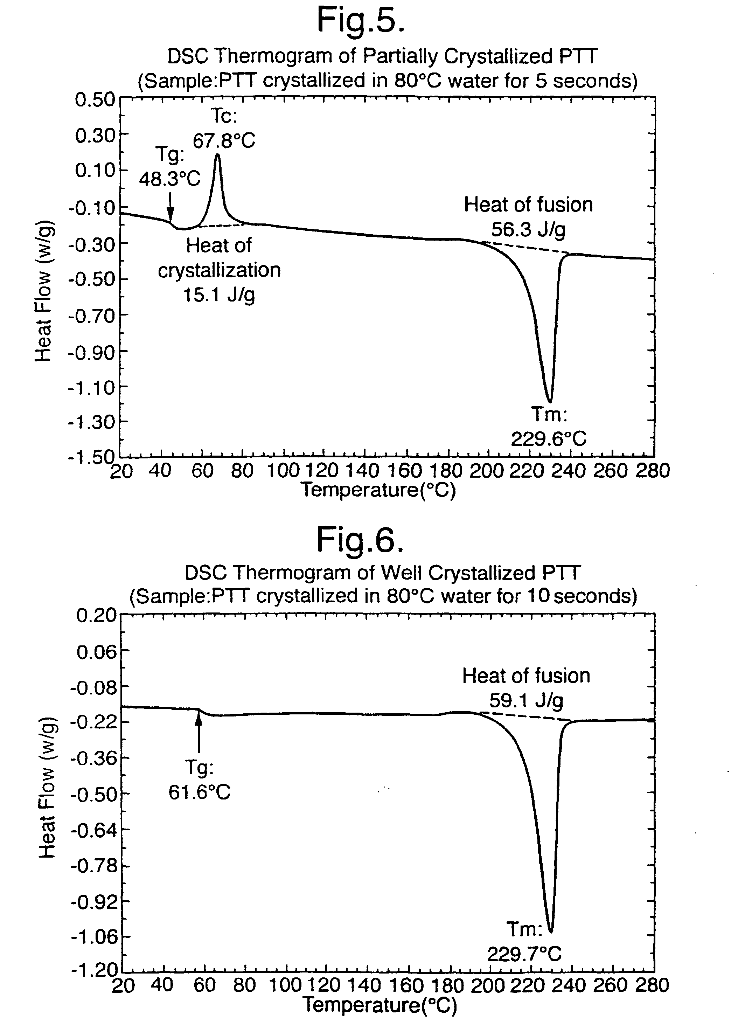

Figure 5 shows a DSC thermogram of a pelletised polytrimethylene terephthalate sample that had been immersed in 80°C water for 5 seconds. This DSC thermogram has a smaller cold crystallisation peak than the DSC thermogram in Figure 4, reflecting the increased crystallinity of the sample (28.2%). The existence of the cold crystallisation peak indicates that crystallisation of this sample was incomplete. The Tg of the sample had increased to 48.3°C as a result of its increased crystallinity.

Figure 6 is a DSC thermogram of a pelletised polytrimethylene terephthalate sample that had been immersed in 80°C water for 10 seconds. This DSC thermogram does not show a distinct cold crystallisation exotherm, indicating that the sample was well crystallised. From the heat of fusion, the crystallinity of the sample was estimated to be 40.5%. The Tg of the sample was increased to 61.6°C by the crystallisation.

The density of each sample was determined in a density gradient column. From the density, the crystallinity was calculated using 1.295 g/cm$^3$ for the density of amorphous polytrimethylene terephthalate and 1.387 g/cm$^3$ for the density of polytrimethylene terephthalate crystal.

The apparent crystallite size of selected samples was determined using wide-angle x-ray diffraction measurements. Although the polymer pellets before hot-water treatment had some degree of crystallinity, the crystallites were too small to be detected by WAXD. After hot-water crystallisation, the crystallites were large enough to be measured and ranged generally from about 10 to about 13 nm.

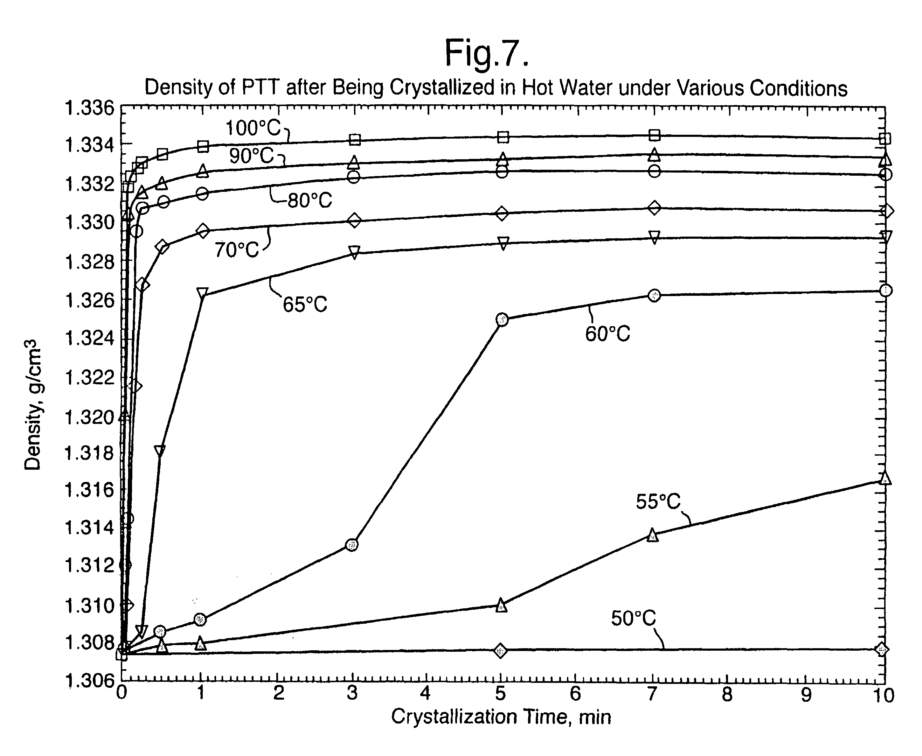

Figure 7 shows the effects of hot-water immersion time and temperature on the density of polytrimethylene terephthalate.

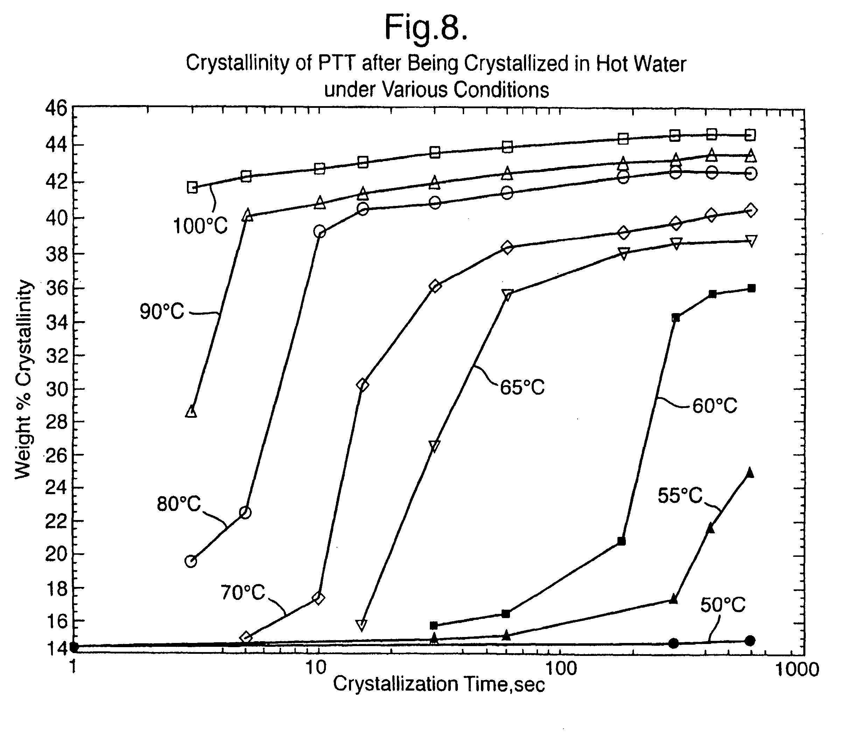

Figure 8 shows the effects of hot-water immersion time and temperature on the degree of crystallinity of polytrimethylene terephthalate.

EP 1 177 235 B1

| TABLE 1 | | | | | | | |
|---|---|---|---|---|---|---|---|
| Hot Water Crystallisation Data for Polytrimethylene terephthalate | | | | | | | |
| Water Temp. (°C) | Cryst. Time | Density (g/cm$^3$) | % Crystallinity | | DSC Cold Cryst heat (J/g) | Appearance | IV (dl/g) |
| | | | Density | DSC | | | |
| NA (Control) | none | 1.3074 | 13.5 | 20.4 | 25.3 | Clear | 0.904 |
| 50 | 5 min | 1.3076 | 13.7 | 22.6 | 23.6 | Clear | 0.902 |
| 50 | 10 min | 1.3078 | 13.9 | 21.7 | 22.1 | Clear | 0.906 |
| 50 | 30 min | 1.3130 | 19.6 | 29.9 | 13.4 | Clear | 0.903 |
| 55 | 30 sec | 1.3078 | 13.9 | 24.2 | 22.1 | Clear | |
| 55 | 1 min | 1.3080 | 14.1 | 20.2 | 23.1 | Clear | |
| 55 | 5 min | 1.3100 | 16.3 | 26.3 | 19.2 | Clear | 0.908 |
| 55 | 7 min | 1.3137 | 20.3 | 24.5 | 15.1 | Hazy | 0.910 |
| 55 | 10 min | 1.3167 | 23.6 | 26.2 | 9.2 | Hazy | 0.903 |
| 55 | 20 min | 1.3234 | 30.9 | 34.3 | 5.2 | Translucent | 0.906 |
| 60 | 30 sec | 1.3085 | 14.7 | 21.0 | 24.5 | Clear | |
| 60 | 1 min | 1.3092 | 15.4 | 23.0 | 22.9 | Hazy | |
| 60 | 3 min | 1.3130 | 19.6 | 32.4 | 7.1 | Translucent | |
| 60 | 5 min | 1.3250 | 32.6 | 31.6 | 3.8 | Translucent | 0.906 |
| 60 | 7 min | 1.3262 | 33.9 | 33.3 | 3.2 | Translucent | 0.908 |
| 60 | 10 min | 1.3266 | 34.3 | 33.1 | 2.5 | Opaque | 0.906 |

| TABLE 1 (Cont'd) | | | | | | | |
| --- | --- | --- | --- | --- | --- | --- | --- |
| Hot Water Crystallisation Data for Polytrimethylene terephthalate | | | | | | | |
| Water Temp. (°) | Cryst. Time | Density (g/cm$^3$) | % Crystallinity | | DSC Cold Cryst heat (J/g) | Appearance | IV (dl/g) |
| | | | Density | DSC | | | |
| 60 | 20 min | 1.3269 | 34.6 | 34.9 | 1.8 | Opaque | 0.909 |
| 65 | 15 sec | 1.3085 | 14.7 | 23.0 | 11.8 | Clear | |
| 65 | 30 sec | 1.3180 | 25.0 | 29.8 | 1.5 | Hazy | |
| 65 | 1 min | 1.3262 | 33.9 | 31.5 | 0.8 | Translucent | 0.906 |
| 65 | 3 min | 1.3283 | 36.2 | 36.0 | 0 | Opaque | 0.907 |
| 65 | 5 min | 1.3289 | 36.8 | 37.7 | 0 | Opaque | 0.908 |
| 65 | 10 min | 1.3291 | 37.1 | 36.3 | 0 | Opaque | 0.904 |
| 65 | 20 min | 1.3293 | 37.3 | 36.9 | 0 | Opaque | 0.905 |
| 70 | 5 sec | 1.3079 | 14.0 | 22.3 | 24.5 | Clear | |
| 70 | 10 sec | 1.3100 | 16.3 | 21.1 | 20.8 | Hazy | |
| 70 | 15 sec | 1.3214 | 28.7 | 29.8 | 10.7 | Translucent | |
| 70 | 30 sec | 1.3282 | 36.1 | 37.5 | 0 | Opaque | |
| 70 | 1 min | 1.3287 | 36.6 | 36.8 | 0 | Opaque | 0.906 |
| 70 | 3 min | 1.3295 | 37.5 | 35.8 | 0 | Opaque | 0.907 |
| 70 | 5 min | 1.3300 | 38.0 | 38.0 | 0 | Opaque | 0.907 |
| 70 | 7 min | 1.3304 | 38.5 | 38.6 | 0 | Opaque | 0.906 |

| TABLE 1 (Cont'd) | | | | | | | |
| --- | --- | --- | --- | --- | --- | --- | --- |
| Hot Water Crystallisation Data for Polytrimethylene terephthalate | | | | | | | |
| Water Temp. (°) | Cryst. Time | Density (g/cm$^3$) | % Crystallinity | | DSC Cold Cryst heat (J/g) | Appearance | IV (dl/g) |
| | | | Density | DSC | | | |
| 70 | 10 min | 1.3307 | 38.8 | 37.9 | 0 | Opaque | 0.902 |
| 70 | 20 min | 1.3307 | 38.8 | 37.6 | 0 | Opaque | 0.905 |
| 80 | 3 sec | 1.3120 | 18.5 | 26.1 | 19.2 | Hazy | |
| 80 | 5 sec | 1.3145 | 21.2 | 24.0 | 20.6 | Translucent | |
| 80 | 10 sec | 1.3295 | 37.5 | 40.5 | 0 | Opaque | |
| 80 | 15 sec | 1.3307 | 38.8 | 38.6 | 0 | Opaque | |
| 80 | 30 sec | 1.3310 | 39.1 | 39.1 | 0 | Opaque | |
| 80 | 1 min | 1.3315 | 39.6 | 35.4 | 0 | Opaque | 0.902 |
| 80 | 3 min | 1.3323 | 40.5 | 39.5 | 0 | Opaque | 0.904 |
| 80 | 5 min | 1.3326 | 40.9 | 37.9 | 0 | Opaque | 0.905 |
| 80 | 7 min | 1.3327 | 40.9 | 40.7 | 0 | Opaque | 0.903 |
| 80 | 10 min | 1.3326 | 40.9 | 39.8 | 0 | Opaque | 0.904 |
| 80 | 20 min | 1.3329 | 40.9 | 38.7 | 0 | Opaque | 0.903 |
| 90 | 3 sec | 1.3200 | 27.2 | 29.9 | 12.4 | Translucent | |
| 90 | 5 sec | 1.3304 | 38.5 | 36.3 | 0 | Opaque | |
| 90 | 10 sec | 1.3310 | 39.1 | 36.6 | 0 | Opaque | |
| 90 | 15 sec | 1.3315 | 39.7 | 37.8 | 0 | Opaque | |

EP 1 177 235 B1

| | | | TABLE 1 (Cont'd) | | | | |
|---|---|---|---|---|---|---|---|
| | | | Hot Water Crystallisation Data for Polytrimethylene terephthalate | | | | |
| Water Temp. (°) | Cryst. Time | Density (g/cm³) | % Crystallinity | | DSC Cold Cryst heat (J/g) | Appearance | IV (dl/g) |
| | | | Density | DSC | | | |
| 90 | 30 sec | 1.3320 | 40.2 | 36.1 | 0 | Opaque | |
| 90 | 1 min | 1.3325 | 40.8 | 37.6 | 0 | Opaque | 0.904 |
| 90 | 3 min | 1.3330 | 41.3 | 37.0 | 0 | Opaque | 0.905 |
| 90 | 5 min | 1.3332 | 41.5 | 38.9 | 0 | Opaque | 0.903 |
| 90 | 7 min | 1.3335 | 41.8 | 40.1 | 0 | Opaque | 0.904 |
| 90 | 10 min | 1.3337 | 41.8 | 39.8 | 0 | Opaque | 0.903 |
| 90 | 20 min | 1.3336 | 42.0 | 40.5 | 0 | Opaque | 0.900 |
| 100 | 3 sec | 1.3318 | 40.0 | 30.1 | 0 | Opaque | |
| 100 | 5 sec | 1.3323 | 40.5 | 36.3 | 0 | Opaque | |
| 100 | 10 sec | 1.3327 | 41.0 | 36.7 | 0 | Opaque | |
| 100 | 15 sec | 1.3330 | 41.3 | 40.0 | 0 | Opaque | |
| 100 | 30 sec | 1.3335 | 41.8 | 35.6 | 0 | Opaque | |
| 100 | 1 min | 1.3338 | 42.2 | 38.5 | 0 | Opaque | 0.903 |
| 100 | 3 min | 1.3342 | 42.6 | 27.7 | 0 | Opaque | 0.901 |
| 100 | 5 min | 1.3344 | 42.8 | 41.6 | 0 | Opaque | 0.898 |
| 100 | 7 min | 1.3345 | 42.9 | 37.7 | 0 | Opaque | 0.894 |
| 100 | 10 min | 1.3345 | 42.9 | 39.8 | 0 | Opaque | 0.897 |

| TABLE 1 (Cont'd) | | | | | | | |
|---|---|---|---|---|---|---|---|
| Hot Water Crystallisation Data for Polytrimethylene terephthalate | | | | | | | |
| Water Temp. (°) | Cryst. Time | Density (g/cm³) | % Crystallinity | | DSC Cold Cryst heat (J/g) | Appearance | IV (dl/g) |
| | | | Density | DSC | | | |
| 100 | 20 min | 1.3347 | 43.2 | 40.2 | 0 | Opaque | 0.898 |
| 80 | 3 sec | 1.3120 | 18.5 | 26.1 | 19.2 | Hazy | |
| 80 | 5 sec | 1.3145 | 21.2 | 24.0 | 20.6 | Translucent | |
| 80 | 10 sec | 1.3295 | 37.5 | 40.5 | 0 | Opaque | |
| 80 | 15 sec | 1.3307 | 38.8 | 38.6 | 0 | Opaque | |
| 80 | 30 sec | 1.3310 | 39.1 | 39.1 | 0 | Opaque | |
| 80 | 1 min | 1.3315 | 39.6 | 35.4 | 0 | Opaque | 0.902 |
| 80 | 3 min | 1.3323 | 40.5 | 39.5 | 0 | Opaque | 0.904 |
| 80 | 5 min | 1.3326 | 40.9 | 37.9 | 0 | Opaque | 0.905 |
| 80 | 7 min | 1.3327 | 40.9 | 40.7 | 0 | Opaque | 0.903 |
| 80 | 10 min | 1.3326 | 40.9 | 39.8 | 0 | Opaque | 0.904 |
| 80 | 20 min | 1.3329 | 40.9 | 38.7 | 0 | Opaque | 0.903 |
| 90 | 3 sec | 1.3200 | 27.2 | 29.9 | 12.4 | Translucent | |
| 90 | 5 sec | 1.3304 | 38.5 | 36.3 | 0 | Opaque | |
| 90 | 10 sec | 1.3310 | 39.1 | 39.6 | 0 | Opaque | |
| 90 | 15 sec | 1.3315 | 39.7 | 27.8 | 0 | Opaque | |
| 90 | 30 sec | 1.3320 | 40.2 | 36.1 | 0 | Opaque | |

EP 1 177 235 B1

| Water Temp. (°) | Cryst. Time | Density (g/cm$^3$) | % Crystallinity | | DSC Cold Cryst heat (J/g) | Appearance | IV (dl/g) |
|---|---|---|---|---|---|---|---|
| | | | Density | DSC | | | |
| 90 | 1 min | 1.3325 | 40.8 | 37.6 | 0 | Opaque | 0.904 |
| 90 | 3 min | 1.3330 | 41.3 | 37.0 | 0 | Opaque | 0.905 |
| 90 | 5 min | 1.3332 | 41.5 | 38.9 | 0 | Opaque | 0.903 |
| 90 | 7 min | 1.3335 | 41.8 | 40.1 | 0 | Opaque | 0.904 |
| 90 | 10 min | 1.3337 | 41.8 | 39.8 | 0 | Opaque | 0.903 |
| 90 | 20 min | 1.3336 | 42.0 | 40.5 | 0 | Opaque | 0.900 |
| 100 | 3 sec | 1.3318 | 40.0 | 30.1 | 0 | Opaque | |
| 100 | 5 sec | 1.3323 | 40.5 | 36.3 | 0 | Opaque | |
| 100 | 10 sec | 1.3327 | 41.0 | 36.7 | 0 | Opaque | |
| 100 | 15 sec | 1.3330 | 41.3 | 40.0 | 0 | Opaque | |
| 100 | 30 sec | 1.3335 | 41.8 | 35.6 | 0 | Opaque | |
| 100 | 1 min | 1.3338 | 42.2 | 38.5 | 0 | Opaque | 0.903 |
| 100 | 3 min | 1.3342 | 42.6 | 27.7 | 0 | Opaque | 0.901 |
| 100 | 5 min | 1.3344 | 42.8 | 41.6 | 0 | Opaque | 0.898 |
| 100 | 7 min | 1.3345 | 42.9 | 37.7 | 0 | Opaque | 0.894 |
| 100 | 10 min | 1.3345 | 42.9 | 39.8 | 0 | Opaque | 0.897 |
| 100 | 20 min | 1.3347 | 43.2 | 40.2 | 0 | Opaque | 0.898 |

TABLE 1 (Cont'd)

Hot Water Crystallisation Data for Polytrimethylene terephthalate

12

**Claims**

1.  A process for reducing the self-adhesiveness of polytrimethylene terephthalate pellets comprising the steps of:

    contacting melt-phase-polymerised polytrimethylene terephthalate pellets having an intrinsic viscosity of at least 0.4 dl/g with an aqueous liquid at a temperature within the range of 60 to 100°C for a time sufficient to induce a degree of crystallinity of 35% to 45% in the polytrimethylene terephthalate pellets,

    wherein the process is carried out in an apparatus for increasing the crystallinity of polytrimethylene terephthalate pellets comprising:

    a vertically-elongated vessel having

    (a) at its upper end, a lateral inlet for controlled introduction of polytrimethylene terephthalate pellets in transport water in vortex flow through the upper portion thereof;
    (b) means in the upper interior portion of the vessel for separating the polytrimethylene terephthalate pellets from the transport water and for removing the transport water from the vessel;
    (c) sides which extend vertically from the top of the vessel and, in the lower portion thereof, taper inward to form a funnel which terminates in an exit for polytrimethylene terephthalate pellets from the bottom of the vessel;
    (d) an inlet for controlled introduction of a heated aqueous liquid into the funnel end of the vessel; and
    (e) means for opening and closing said exit to provide controlled flow of partially-crystallised pellets therefrom.

2.  The process according to claim 1 in which the polytrimethylene terephthalate pellets have an intrinsic viscosity within the range of 0.5 to 1.0 dl/g.

3.  The process according to claim 1 or 2 in which the polytrimethylene terephthalate pellets are maintained in contact with the aqueous liquid for a time within the range of 3 seconds to 3 minutes.

4.  The process according to claim 1, 2 or 3 which further comprises providing continuous pellet movement during contact with the aqueous liquid.

5.  The process according to any one of the preceding claims in which the pellets are contacted with the aqueous liquid for a sufficient time to produce polytrimethylene terephthalate pellets having a glass transition temperature of at least 60°C.

6.  The process according to any one of the preceding claims in which the polytrimethylene terephthalate pellets have a differential scanning calorimeter thermogram **characterised by** the absence of a cold crystallisation peak.

7.  The process according to any one of the preceding claims in which the crystallinity of the treated polytrimethylene terephthalate pellets is within the range of 36 to 45%.

8.  The process according to any one of the preceding claims in which the treated polytrimethylene terephthalate pellets have an apparent crystallite size of at least 10 nm.

9.  The process according to any one of the preceding claims in which the polytrimethylene terephthalate pellets have a density of at least 1.33 g/cm$^3$.

10. Apparatus for increasing the crystallinity of polytrimethylene terephthalate pellets comprising:

    a vertically-elongated vessel having

    (a) at its upper end, a lateral inlet for controlled introduction of polytrimethylene terephthalate pellets in transport water in vortex flow through the upper portion thereof;
    (b) means in the upper interior portion of the vessel for separating the polytrimethylene terephthalate pellets from the transport water and for removing the transport water from the vessel;
    (c) sides which extend vertically from the top of the vessel and, in the lower portion thereof, taper inward to form a funnel which terminates in an exit for polytrimethylene terephthalate pellets from the bottom of the vessel;

(d) an inlet for controlled introduction of a heated aqueous liquid into the funnel end of the vessel; and

(e) means for opening and closing said exit to provide controlled flow of partially-crystallised pellets therefrom.

**Patentansprüche**

1. Verfahren zur Verringerung der Selbstklebrigkeit von Polytrimethylenterephthalatpellets, das den Schritt des Inkontaktbringens von in der Schmelzphase polymerisierten Polytrimethylenterephthalatpellets mit einer Grenzviskosität von wenigstens 0,4 dl/g mit einer wäßrigen Flüssigkeit bei einer Temperatur im Bereich von 60 bis 100°C während einer zum Induzieren eines Kristallinitätsgrades von 35% bis 45% in den Polytrimethylenterephthalatpellets ausreichenden Zeit umfaßt,

wobei das Verfahren in einer Vorrichtung zur Steigerung der Kristallinität von Polytrimethylenterephthalatpellets ausgeführt wird, die einen sich vertikal erstreckenden Behälter umfaßt, der

(a) an seinem oberen Ende einen seitlichen Einlaß für ein geregeltes Einbringen von Polytrimethylenterephthalatpellets in Transportwasser in einem Wirbelstrom durch seinen oberen Teil aufweist;

(b) im oberen Innenteil des Behälters Mittel zur Trennung der Polytrimethylenterephthalatpellets von dem Transportwasser und zum Abführen des Transportwassers aus dem Behälter aufweist;

(c) Seitenwände aufweist, die sich lotrecht vom Kopf. des Behälters weg erstrecken und in dessen unterem Teil nach innen verjüngen, um einen Trichter auszubilden, der in einen Auslaß für Polytrimethylenterephthalatpellets vom Boden des Behälters endet;

(d) einen Einlaß für ein gesteuertes Einführen einer erhitzten wäßrigen Flüssigkeit in das Trichterende des Behälters aufweist; und

(e) Mittel zum Öffnen und Schließen des Auslasses aufweist, um einen kontrollierten Strom von partiell kristallisierten Pellets daraus zu ergeben.

2. Verfahren nach Anspruch 1, worin die Polytrimethylenterephthalatpellets eine Grenzviskosität im Bereich von 0,5 bis 1,0 dl/g aufweisen.

3. Verfahren nach Anspruch 1 oder 2, worin die Polytrimethylenterephthalatpellets mit der wäßrigen Flüssigkeit während einer Zeit im Bereich von 3 Sekunden bis 3 Minuten in Kontakt gehalten werden.

4. Verfahren nach Anspruch 1, 2 oder 3, das weiterhin ein kontinuierliches Bewegen der Pellets während des Kontaktes mit der wäßrigen Flüssigkeit umfaßt.

5. Verfahren nach einem der vorstehenden Ansprüche, worin die Pellets mit der wäßrigen Flüssigkeit während einer ausreichenden Zeit in Kontakt gebracht werden, um Polytrimethylenterephthalatpellets mit einer Glasübergangstemperatur von wenigstens 60°C auszubilden.

6. Verfahren nach einem der vorstehenden Ansprüche, worin die Polytrimethylenterephthalatpellets ein Differentialabtastkalorimeter-Thermogramm aufweisen, das sich durch das Fehlen eines Kaltkristallisationspeaks auszeichnet.

7. Verfahren nach einem der vorstehenden Ansprüche, worin die Kristallinität der behandelten Polytrimethylenterephthalatpellets im Bereich von 36 bis 45% liegt.

8. Verfahren nach einem der vorstehenden Ansprüche, worin die behandelten Polytrimethylenterephthalatpellets eine scheinbare Kristallitgröße von wenigstens 10 nm aufweisen.

9. Verfahren nach einem der vorstehenden Ansprüche, worin die Polytrimethylenterephthalatpellets eine Dichte von wenigstens 1,33 g/cm$^3$ aufweisen.

10. Vorrichtung zur Steigerung der Kristallinität von Polytrimethylenterephthalatpellets, umfassend ein sich vertikal erstreckendes Gefäß, das

(a) an seinem oberen Ende einen seitlichen Einlaß für ein geregeltes Einbringen von Polytrimethylenterephthalatpellets in Transportwasser in einem Wirbelstrom durch seinen oberen Teil aufweist;

(b) im oberen Innenteil des Behälters Mittel zur Trennung der Polytrimethylenterephthalatpellets von dem Transportwasser und zum Abführen des Transportwassers aus dem Behälter aufweist;

(c) Seitenwände aufweist, die sich lotrecht vom Kopf des Behälters weg erstrecken und in dessen unterem Teil nach innen verjüngen, um einen Trichter auszubilden, der in einen Auslaß für Polytrimethylenterephthalatpellets vom Boden des Behälters endet;

(d) einen Einlaß für ein gesteuertes Einführen einer erhitzten wäßrigen Flüssigkeit in das Trichterende des Behälters aufweist; und

(e) Mittel zum Öffnen und Schließen des Auslasses aufweist, um einen kontrollierten Strom von partiell kristallisierten Pellets daraus zu ergeben.

**Revendications**

1. Procédé de réduction de l'autoadhésivité de granules de polytriméthylène téréphtalate comprenant les étapes de :

mise en contact de granules de polytriméthylène téréphtalate polymérisés en phase fondue ayant une viscosité intrinsèque d'au moins 0,4 dl/g avec un liquide aqueux à une température dans l'intervalle de 60 à 100°C pendant un temps suffisant pour induire un degré de cristallinité de 35% à 45% dans les granules de polytriméthylène téréphtalate,

lequel procédé est réalisé dans un appareil pour accroître la cristallinité de granules de polytriméthylène téréphtalate comprenant :

un récipient allongé verticalement comportant :

(a) à son extrémité supérieure, une entrée latérale pour une introduction contrôlée de granules de polytriméthylène téréphtalate dans de l'eau de transport en circulation tourbillonnaire à travers la partie supérieure de celui-ci;

(b) un moyen dans la partie intérieure supérieure du récipient pour séparer les granules de polytriméthylène téréphtalate de l'eau de transport et pour évacuer l'eau de transport du récipient;

(c) des faces qui s'étendent verticalement du haut du récipient et, dans la partie inférieure de celui-ci, vont en se rétrécissant vers l'intérieur pour former un entonnoir qui aboutit à une sortie pour les granules de polytriméthylène téréphtalate du fond du récipient;

(d) une entrée pour l'introduction contrôlée d'un liquide aqueux chauffé dans l'extrémité en entonnoir du récipient; et

(e) un moyen pour ouvrir et fermer ladite sortie pour obtenir un écoulement contrôlé de granules partiellement cristallisés de celle-ci.

2. Procédé suivant la revendication 1, dans lequel les granules de polytriméthylène téréphtalate ont une viscosité intrinsèque allant de 0,5 à 1,0 dl/g.

3. Procédé suivant l'une ou l'autre des revendications 1 et 2, dans lequel les granules de polytriméthylène téréphtalate sont maintenus au contact du liquide aqueux pendant un temps allant de 3 secondes à 3 minutes.

4. Procédé suivant l'une quelconque des revendications 1, 2 et 3, qui comprend de plus la formation d'un mouvement de granules continu au cours du contact avec le liquide aqueux.

5. Procédé suivant l'une quelconque des revendications précédentes, dans lequel les granules sont mis en contact avec le liquide aqueux pendant un temps suffisant pour produire des granules de polytriméthylène téréphtalate ayant une température de transition de verre d'au moins 60°C.

6. Procédé suivant l'une quelconque des revendications précédentes, dans lequel les granules de polytriméthylène téréphtalate ont un thermogramme de calorimètre à balayage différentiel **caractérisé par** l'absence d'un pic de cristallisation à froid.

7. Procédé suivant l'une quelconque des revendications précédentes, dans lequel la cristallinité des granules de polytriméthylène téréphtalate traités se situe dans la plage de 36 à 45%.

**8.** Procédé suivant l'une quelconque des revendications précédentes, dans lequel les granules de polytriméthylène téréphtalate traités ont une taille de cristallite apparente d'au moins 10 nm.

**9.** Procédé suivant l'une quelconque des revendications précédentes, dans lequel les granules de polytriméthylène téréphtalate ont une densité d'au moins 1,33 g/cm$^3$.

**10.** Appareil pour accroître la cristallinité de granules de polytriméthylène téréphtalate comprenant :

un récipient allongé verticalement comportant :

(a) à son extrémité supérieure, une entrée latérale pour une introduction contrôlée de granules de polytriméthylène téréphtalate dans de l'eau de transport en circulation tourbillonnaire à travers la partie supérieure de celui-ci;

(b) un moyen dans la partie intérieure supérieure du récipient pour séparer les granules de polytriméthylène téréphtalate de l'eau de transport et pour évacuer l'eau de transport du récipient;

(c) des faces qui s'étendent verticalement du haut du récipient et, dans la partie inférieure de celui-ci, vont en se rétrécissant vers l'intérieur pour former un entonnoir qui aboutit à une sortie pour les granules de polytriméthylène téréphtalate du fond du récipient;

(d) une entrée pour l'introduction contrôlée d'un liquide aqueux chauffé dans l'extrémité en entonnoir du récipient; et

(e) un moyen pour ouvrir et fermer ladite sortie pour obtenir un écoulement contrôlé de granules partiellement cristallisés de celle-ci.

# Fig.1.

# Fig.2.

# Fig.3.

# Fig.4.

## DSC Thermogram of Clear PTT Pellet
### (Sample: PTT as pelletized)

# Fig.5.

### DSC Thermogram of Partially Crystallized PTT
### (Sample:PTT crystallized in 80°C water for 5 seconds)

# Fig.6.

### DSC Thermogram of Well Crystallized PTT
### (Sample:PTT crystallized in 80°C water for 10 seconds)

# Fig.7.

Density of PTT after Being Crystallized in Hot Water under Various Conditions

## Fig.8.
### Crystallinity of PTT after Being Crystallized in Hot Water under Various Conditions

EP 1 177 235 B1